# EUROPEAN PATENT APPLICATION

(11) **EP 3 023 846 A1**
(43) Date of publication of application: **25.05.2016**
(21) Application number: 14193755.7
(22) Date of filing: 18.11.2014
(51) Int. Cl.: G05B 9/02, G05B 19/4063

(54) **Electromechanical drive system**

(71) Applicant: Moog Unna GmbH, 59423 Unna (DE)
(72) Inventor: O'Sullivan, Robert, Carrigaline Cork (IE); O'Sullivan, Dennis, Crosshaven Cork (IE); Rösmann, Tobias, 44263 Dortmund (DE); Pauli, Matthias, 33181 Bad Wünnenberg (DE)
(74) Representative: Schmalz, Günther

(57) **Abstract**

The present invention provides an electromechanical drive system (1) for actuations of a component (3), where reliability, integrity and diagnostics of the actuation (A) of the component (3) is safety-relevant for operating the component (3), and a method to operate such a drive system (1) as well as a pitch system (71) and a wind turbine (7) each comprising such drive systems (1). The electromechanical drive system (1) comprises beside conventional driving parts a safety module (4) and an advanced position sensor (5) adapted to monitor component position and/or speed of the actuated component (3) with a sufficient degree of reliability, integrity and diagnostics to fulfill safety requirements for the safety-relevant actuations and being connected to the safety module (4) via a first data connection (51) to send corresponding sensor signals (SS) comprising position and/or speed data to the safety module (4), where the safety module (4) is connected to a conventional motor control unit (22) via a second data connection (41) to transmit actuation signals (AS) like actuation speed and desired component position to the conventional motor control unit (22) for actuating (A) the component (3) in accordance to one or more safety functions (SF) at least implemented on the safety module (4) to ensure safe actuation of the component (3), and is adapted to monitor position and/or speed of the component (3) utilizing the received sensor signals (SS) compared with an expected behavior from the actuation signals (AS) and the motor control signals (MCS) are transmitted to a conventional power unit (23) via the safety module (4) to execute the safety functions (SF), where the safety functions (SF) at least comprise the actuation (A) of the component (3) in a resting or neutral position (FP) as a first safety function (SFR) executed by safety module (4) at least in an emergency situation.

## Description

### Field of the invention

The present invention relates to an electromechanical drive system and a method to operate such a drive system as well as a pitch system and a wind turbine each comprising such drive systems.

### Background of the invention

There are several applications, where components have to be actuated, e.g. moved or rotated. In case of components, where the position and actuation dynamics have a large impact on the device, system or environmental safety, the component is a safety-relevant component and its actuation has to be carried out with high integrity and reliability. Such drive components fulfilling high safety requirements have to be carefully designed and tested to avoid systematic errors and random control errors supported by diagnostic functions. In order to fulfill the safety requirements, commercial available electromechanical drives comprise highly advanced motors and motor control units using components manufactured with cost-intensive high mechanical precision, comprising additional expensive feedback control circuits and expensive and highly reliable control software. The resulting drive components correspondingly have high development and design costs as well as high manufacturing costs.

It would be desirable to obtain electromechanical drives providing the same level of safety, which can be manufactured at lower costs.

### Summary of the invention

It is the object of the present invention to provide a drive system for actuating safety-relevant components, which fulfils safety requirements for actuating these components with a high level of reliability and integrity, which is simultaneously easily implementable at low costs.

This object is solved by an electromechanical drive system with at least one electromechanical drive unit to actuate a movable component, where reliability, integrity and diagnostics of the actuation of the component is safety-relevant for operating the component, comprising a safety module, an advanced position sensor, an electromechanical motor to actuate the component, a conventional power unit to power the electromechanical motor, a conventional motor control unit connected through the safety module to the conventional power unit in order to control the conventional power unit via motor control signals and to enable execution of safety functions by the safety module, a conventional measuring unit connected to the conventional motor control unit to determine motor position and/or motor speed data and to send these data as motor signals to the conventional motor control unit, where the advanced position sensor is adapted to monitor component and/or motor position and/or speed of the actuated component and/or motor with a sufficient degree of reliability and integrity to fulfill safety requirements for the safety-relevant actuations and being connected to the safety module via a first data connection to send corresponding sensor signals comprising position and/or speed data to the safety module, where the safety module is connected to the conventional motor control unit via a second data connection to transmit actuation signals like actuation speed and desired component position to the conventional motor control unit for actuating the component in accordance to one or more safety functions at least implemented on the safety module to ensure safe actuation of the component, and is adapted to compare the monitored position and/or speed of the component with an expected behavior from the actuation signals, where the safety functions at least comprise the actuation of the component in a resting or neutral position as a first safety function executed by safety module at least in an emergency situation.

The electromechanical drive system may be any system to actuate a component, where the actuation is not limited to a certain type of actuation. For example, actuations might be linear movements or rotations in one or more directions, e.g. movements forth and/or back in case of linear movements or rotations to the right and/or left in case of rotations, where the electromechanical drive system according to the present inventions is limited to applications, where reliability and integrity of the actuation of the component is safety-relevant for operating the component and corresponding diagnostic measures are in place. These boundary conditions are fulfilled by the presence of at least the safety module and the advanced position sensor ensuring safe actuation of the component, where the terms "safe" and "safety" denote components suitable to perform and/or control actuations, which have to be performed with a degree of reliability, integrity and diagnostics sufficient to fulfill safety requirements for release of such systems for safety-relevant applications developed in accordance to the IEC 61508 Standard and/or the IEC 13849 Standard. In case of a pitch system for wind turbines comprising the electromechanical drive system, the electromechanical drive system is developed in accordance to the IEC 61400 Standard for wind turbines. In contrast to that the term "conventional" denotes components, such as conventional motor control unit, conventional power unit and conventional measuring unit, which are not adapted to any specific safety standard to provide sufficient reliability, integrity and diagnostics for actuation of a component without support by other additional components.

The electromechanical drive unit according to the present invention fulfills the safety requirements for actuating the movable component although this unit also comprises conventional components due to its interaction with the safe components, here the safety module and the advanced position sensor, in specified way in accordance to the present invention providing overall reliability, integrity and diagnostics (=safety) of the electromechanical drive unit.

The electromechanical motor to actuate the component might be any suitable motor. The motor does not have to comply with the safety standards to be fulfilled by the electromechanical drive system. The conventional power unit to power the electromechanical motor might be any power unit suitable to power the motor providing power requirements to the electromechanical motor. As an example, the conventional power unit may comprise amplifiers, inverters, gate drives and final power outputs to motor and brakes. The power source to power the system might be an internal power source, e.g. a battery, or an external power source, e.g. the grid, connected to the electromechanical drive system via suitable connection. The conventional motor control unit and the conventional power unit might be arranged on single or on a combined PCB.

The conventional motor control unit might be any control unit suitable to control the motor in order to execute the demanded actuations or stops via motor control signals denoting signals to actuate the motor, e.g. to rotate the motor with a specified speed until a certain actuation of the component is executed, to vary this speed, to decelerate the motor and/or to stop the motor (brake the motor). The motor control signals regarding motor speed might be outputted as PWM signals, the motor control signals regarding the brake operations might be outputted as PWM brake control signals. As an example the motor brake might be a holding permanent magnetic brake. Pulse-width modulation (PWM) is a modulation technique that controls the width (in time) of an electrical pulse based on modulator signal information. This modulation is mainly used to allow the control of the power supplied to electrical devices, especially to inertial loads such as motors.

The conventional measuring unit might be any unit suitable to determine motor position and/or motor speed data. As an example, the measuring unit is a resolver determining motor position and motor angle. The data from the measuring unit are transmitted to the conventional motor control unit as motor signals. As another embodiment the conventional measuring unit determines motor position and/or speed by a selfsensing realtime algorithm, e.g. a Kalman Filter, which uses the motor current as an input to determine the position and/or speed of the motor.

The safety module is connected to the conventional motor control unit via a second data connection, e.g. a data bus, and acts as a man-in-the-middle device between the conventional motor control unit and a data source providing demanded input data to execute a component actuation to a certain positions in a certain way in accordance to one or more safety functions. The data source might be the advanced position sensor or an external data source like a central unit, where in response actuation signals like actuation speed and desired component position are transmitted from the safety module to the conventional motor control unit. The safety functions implemented on the safety module ensure safe actuation of the component ensuring reliability, integrity and diagnostics of the actuations. Therefore the safety module monitors position and/or speed of the component via comparing it with the reference signal and the corresponding data determined from the sensor signals received from the advanced position sensor (providing safe position and/or speed data). The sensor signals comprising position and/or speed data transmitted from the advanced position sensor to the safety module may be based on measured component position and/or speed of the actuated component. In an alternative embodiment the data transmitted from the advanced position sensor may be based on measured motor position and/or speed of the motor as long as the data measured from the motor provide a sufficient degree of reliability and integrity to fulfill safety requirements. Here the advanced position sensor might be attached to the motor shaft, where a direct correlation between shaft position and speed and component position and speed exists. The sensor signals are further processed by the safety module in order to calculate component position and/or speed from the motor position and/or speed.

In an embodiment the advanced position sensor is a position encoder, preferably a safe rotary encoder converting rotary position of the component to an analog (e.g., analog quadrature) or digital (e.g., digital quadrature, 32-bit parallel, or USB) electronic signal or linear encoder similarly converting linear position of the component to an electronic signal providing safe absolute position and/or speed and fault status data via a FS-bus interface developed according to the IEC 61508 Standard as the first data connection to the safety module. A FS- bus denotes any safe bus based data communication protocol compliant with IEC 61784-3 or its corresponding additional specification IEC 61784-3-x. In case of a rotary encoder for rotations as the actuations the advanced position sensor might be a SIL rated multi-turn encoder. The position and/or speed data provided by the advanced position sensor are also denoted as safe position and/or speed data.

The first safety function actuates the component in a resting or neutral position in an emergency situation. This resting or neutral position denotes a position, where the component will not be damaged and the environment around the component will not be endangered by the component or by malfunctions of the component. As an example, the first safety function in case wind turbines denotes a safe feathering run turning the rotor blades out of the wind in order to establish a feathering position for the rotor blades.

For execution of safety functions by the safety module, the safety module comprises one or more processors or computer chips able to execute one or more programmed procedure and/or to control semiconductor components installed on the safety module in order to execute the programmed procedures. The required components of the safety module are connected directly or indirectly via interfaces within the safety module or to the other components of the electromechanical drive unit in order to execute the programmed procedures.

The provided electromechanical drive system for actuating safety-relevant components fulfils safety requirements for actuating these components with a high level of reliability, integrity and diagnostics, which is simultaneously easily implementable at low costs, because the motor and control components such as motor control unit, power unit and measuring unit can be used as conventional components, which are implementable with low manufacturing, testing and release effort lowering the manufacturing and implementing costs of the conventional components. The safety functions are implemented within only two components, the safety module and the advanced sensor reducing the overall costs for a safe electromechanical drive unit. This reduces the development costs for applied component software significantly, since common software for controlling the conventional components can be used. Furthermore the electromechanical drive system according to the present invention provides a safe drive system, where the safety functions are not limited to only stop the corresponding component in the current position, but also being able to drive the component from a current position into a safe position providing a combination of moving and stopping of the component in a safe manner.

In an embodiment the safety functions implemented on the safety module further comprise one or more of the safety functions of the following functions safe-limited-position-control function to ensure the position of the component being within an allowed position range, safe-limited-speed-control function to ensure the speed of the actuated component not exceeding a maximum speed, safe-direction-control function to ensure the component being actuated into the desired direction, safe-torque-off-control function to ensure that the torque applied to the component is zero, safe-brake-control function to ensure the brake of the motor is applied and/or safe-stop-control function to ensure execution of a stopping procedure in accordance to other safety functions and where the safety module is suitably adapted (or designed) to execute the implemented safety functions. The safety functions are implemented as suitable hardware/software modules comprising processors to run the function related software within the safety module. Applying these safety functions the component can be controlled in a safety mode for all possible situations

The safe-limited-position-control function monitors the component position such that the components stay within a defined position range. E.g. in case of rotor blades of a wind turbine as the actuated component the limited position range is between 0° and 90° blade position, where 90° denotes the feathering position and 0° denotes the position, where the wind applies maximum load to the rotor blade. The safe-limited-speed-control function continuously monitors the speed of the actuation of the component during all modes actuating the component. E.g. in case of rotor blades of a wind turbine as the actuated component the maximum speed to be acceptable is 6°/sec for rotating the blade about its longitudinal axis. The safe-direction-control function monitors the moving direction of the component, e.g. direction forth or back in case of linear movements or right of left in case of rotations. The safe-torque-off-control function removes power from the electromechanical motor by blocking the corresponding motor control signal in order to provide zero torque to the component and can be used by other safety function as part of these other safety functions. The safe-brake-control function for instance removes power from the brake in order to engage the brake implying a brake type required to be de-energized to cause the brake to engage and can be used by other safety function as part of these other safety functions. The safe-stop-control function may initiate a deceleration of the electromechanical motor and subsequently, after a specific time delay, commanding application of the safe-torque-off-control function and the safe-brake-control function to achieve a safe state of the component and can be used by other safety function as part of these other safety functions.

Furthermore at least the safety functions safe-limited-position-control function, safe-limited-speed-control function and safe-direction-control function may comprise defined fault reactions in order to guarantee reliability, integrity and diagnostics of the actuation of the component. The fault reaction of the safe-limited-position-control function, safe-limited-speed-control function and/or the safe-direction-control function might demand execution of the first safety function or demanding the safe-stop-control function depending on the operation mode of the drive system.

In order to execute safety functions such as first safety function, safe-limited-position-control function, safe-limited-speed-control function and/or safe-stop-control function, safety related commands and data might be sent via the second data connection, e.g. a full duplex data bus, to the conventional motor control unit.

In an embodiment the safety module comprises a PWM blocker module receiving the motor control signals from the conventional motor control unit, where execution of at least one of the safe-torque-off-control function and/or safe-stop-control function results in blocking the motor control signal from passing the PWM blocker module towards the conventional power control unit. The PWM motor control signal inputted from the conventional motor control unit to the PWM blocker module controls the electromechanical motors standard behavior, where power is switched to the motor based on PWM motor signal demands. The PWM blocker module is adapted to override the motor control signal coming from the conventional motor control unit in order to execute this safety function. In a preferred embodiment the output of the PWM blocker module is set to 0V in order to execute this safety function. Setting the safety input for the PWM blocker module to 0V results in setting the output of the PWM blocker module to the conventional power unit to 0V. This embodiment enables to implement the safety function easily into the motor control signals without requiring a safe motor control unit.

In an embodiment the safety module further comprises a brake blocker module receiving a brake control signal as another type of motor control signal from the conventional motor control unit, where execution of at least one of the safe-brake-control function and/or safe-stop-control function results in blocking the brake control signal from passing the brake blocker module towards the conventional power control unit. The brake control signal inputted from the conventional motor control unit to the brake blocker module controls the electromechanical motors standard behavior including brake action, where power is switched to the brake based on brake signal demands (possibly also PWM signals). The brake blocker module is adapted to override the brake control signal as motor control signal coming from the conventional motor control unit in order to execute this safety function. In a preferred embodiment the output of the brake blocker is set to 0V to execute this safety function. Setting the safety input for the brake blocker module to 0V results in setting the output of the brake blocker module to the conventional power unit to 0V. This embodiment enables to implement the safety function easily into the motor control signals without requiring a safe motor control unit. The motor control signals comprise a motor control signal in order to drive the motor and the brake control signal in order to brake the motor.

For executing the safe-stop-function, the above described procedures also apply for executing the safe-torque-off-control function and safe-brake-control function as part of the safe-stop-function. Furthermore the first safety function as well as safe-limited-position-control function, safe-limited-speed-control function and safe-direction-control function comprise execution of safe-torque-off-control function and safe-brake-control function when finishing an actuation in accordance to these safety functions.

In an embodiment the safety module is adapted to prove an error-free communication and operation of the conventional motor control unit by a so-called heartbeat-signal, where the conventional motor control unit answers the heartbeat signal in a predetermined manner in case of operating properly. The execution of heartbeat signal comprises a procedure, where a counter of the safety module is incremented and a value is written to a first parameter in the next heartbeat signal to be sent to the conventional motor control unit. In parallel the safety module starts a timer to check for communication timeout with the conventional motor control unit. The heartbeat signal is fired periodically to the conventional motor control unit, e.g. via the second data connection, where the heartbeat signal initiates a new message exchange with the safety card. The conventional motor control unit copies and optionally bit-wise inverts the value of the specific parameter to a second specific parameter according to a mapping configuration including this second specific parameter into the message sent back to the safety module, e.g. via the second data connection. The safety module reads the value of the second parameter from the received back message and confirms the value (optionally bit-wise inverted) is equal to its own counter. If the timer within the safety module expires before reading the message from the conventional motor control unit or the compared value differs from the own counter, a fault reaction scheme is initiated. The fault reaction might be the execution of the first safety function. The correctly working communication between safety module and the conventional motor control unit ensures control commands transmitted from the safety module can be executed by the conventional motor control unit, which as a diagnostic procedure increases the degree of reliability and integrity of the electromechanical drive system. In a preferred embodiment, in case of detected errors in communication and/or operation of the conventional motor control unit, the safety module is adapted to reset the conventional motor control unit via a direct access to a reset line of the conventional motor control unit as the first executed fault reaction before initiating other fault reactions. This measure resulting from the previous diagnostic procedure enables the safety module to get the motor control unit working properly again in order to further improve the degree of reliability and integrity of the electromechanical drive system. The re-establishment of a working system provides an improved solution to enable continuing the normal operation of the component compared to the mere execution of an emergency actuation of the component.

In an embodiment the safety module is arranged as a plug-in safety card comprising a first interface as the second data connection to connect the safety card to the conventional motor control unit in order to at least transmit the actuation signals to the conventional motor control unit and second interfaces to transmit motor control signals and/or brake control signal as another type of motor control signals to the conventional power unit via the safety card. These embodiments provide the possibility to develop the safety related circuits separately to the wiring of the conventional components in a plug-in solution applicable to different applications in order to save development, manufacturing and component costs. In a preferred embodiment the first interface comprises a FS-bus as safety interface and/or a SSI interface as a conventional data interface to execute this data transfer. Here the first interface might be a conventional SSI interface with safety measures like check sum algorithms implemented on it or might be a safe interface or arranged as a combination of safe and conventional interfaces. Via this data connection the conventional motor control unit may transmit non-safe speed and position data of the motor as well as motor temperature feedback and status data to the safety module in order to provide feedback to the execution of the actuation signals. Here, the safety card denotes a printed circuit board comprising the required hardware and software components in order to execute the implemented safety functions. The safety card and the motor control unit might be arranged within the same housing. In an alternative embodiment the safety card and at least the conventional motor control unit are arranged on the same printed circuit board. In a preferred embodiment the first interface is a FS- bus denoting any data communication protocol compliant with IEC 61784-3 or its corresponding additional specification IEC 61784-3-x, preferably a FSOE (EtherCat) or a ProfiSafe (ProfiNet) bus denoting interfaces with implemented safety protocols according to IEC 61508 Standard.

In a further embodiment the electromechanical drive system comprises at least two electromechanical drive units, where the safety modules of the electromechanical drive units are connected to each other in order to at least exchange information comprising information about any applied safety function in order to trigger the other safety modules to execute corresponding safety functions in an aligned way. The number of electromechanical drive units depends on the particular application. In more complex applications, the actuation of different components especially when interacting in a certain way, e.g. multiple rotor blades of a wind turbine or ship propeller each accelerated (in case of wind) or loaded (in case of a ship propeller) separately but mechanically connected as a propeller to the same rotation axis, requires alignment of the separate actuations in order to provide an overall efficient and safe system. This alignment is possible for electromechanical drive units connected to each other in order to exchange information.

In an preferred embodiment the connection is established via a central unit comprising a central unit safety card connected to each electromechanical drive unit via a suitable bidirectional interface to send demanded actuation and/or position data for the components to the safety modules of each electromechanical drive unit for generating corresponding actuation signals and also sending at least a first safety signal to the safety modules in an emergency situation, where the safety modules are adapted to execute the first safety function in response to the first safety signal. The central unit safety card denotes an arrangement of components, where one or more safety functions are implemented. The central unit safety card may comprises one or more processors or computer chips able to execute one or more programmed procedure and/or to control semiconductor components installed on the central unit safety card in order to execute the programmed procedures. The central unit safety card might be connected directly or indirectly via interfaces within the safety modules in order to execute the programmed procedures. In a preferred embodiment the bidirectional interface is a FSOE (EtherCat) interface. Under normal operation the central unit, preferably the central unit safety card, may issue speed commands for the conventional motor control units via the safety modules of each electromechanical drive unit in order to execute component actuations in an aligned manner. The possibility to send safety commands such as a first safety signal to the electromechanical drive units provides additional safety related functionality to the system according to the present invention on a central level, which can consider the overall situation of the system, which might be in an emergency situation when considered together, which might be not the case, when only considering the same situation of the system purely on a drive unit level. The safety modules of each electromechanical drive unit will at least execute the first safety function in response to the first safety signal received from the central unit being supervising in this case. The separate safety modules might be arranged in an embodiment to also execute the first safety function in case of lost communication connection to the central unit or in case of an internal error within the central unit. Here the safety module is a man-in-the-middle device between conventional motor control unit and central unit. In another embodiment the central unit may comprise a central unit safety card executing at least some of the safety related functions (e.g. the first safety function) and a central unit control card sending the demanded actuation and/or position data to the components. The central unit safety card is a component in addition to the safety modules in electromechanical drives units and acts as a co-ordinator to ensure that if one electromechanical drive unit executes the fist safety function the central unit safety card demands all others safety modules of the other electromechanical drive units to react also with execution of the fist safety function. The central unit safety card also acts to spread the demand of executing a first safety function from the central unit to all electromechanical drive units.

In another embodiment each safety module is adapted to report at least safe position and/or speed data of the component from the safety module to the central unit, where the central unit safety card is adapted to compare the reported safe position and/or speed data to a demanded position and/or speed of each actuator and in case of a mismatch is adapted to send the first safety signal to each safety module. This enables the central unit to execute plausibility checks between the demanded positions of the components actuated by the electromechanical drive units and the current position measured by the advanced position sensor and reported to the central unit via the corresponding safety modules. In case of a central unit comprising a central unit control card in addition to the central unit safety card, the plausibility checks are performed on the central unit safety card. Safe position or speed data denote the position or speed data received from the advanced position sensor.

The invention further relates to a pitch system suitable to rotate at least one rotor blade, preferably all rotor blades, of a wind turbine comprising an electromechanical drive system according to the present invention for rotating the rotor blades, where the rotor blade is the component to be actuated, where the electromechanical motor is adapted to rotate the rotor blade about its longitudinal axis as the actuation and where a safe feathering run to rotate the rotor blade in a feathering position is the first safety function. The term "pitch system" denotes any system suitable to rotate the rotor blades of a wind turbine about its longitudinal axis. The pitch system for wind turbines has to fulfil two essential functions: First, it performs as an actuator for the turbine speed and power control when the wind speed exceeds the turbine's rated values and second, it acts as an actuating system for braking the wind turbine. The term "safe feathering run" denotes a stopping procedure for the wind turbine, where all or at least a sufficient number of rotor blades have to be moved into the feathering position, where the wind does not apply an accelerating force to the particular rotor blades and the loads on all structural parts during the procedure are distributed and balanced. In order to reach the feathering position, the rotor blades are moved out of the wind synchronously. The feathering run is the only possibility to stop a wind turbine, because the force on the rotor blades applied by the wind exceeds the braking forces of any applicable electromechanical brake systems.

In an embodiment the electromechanical drive system comprises two or more electromechanical drive units, further comprising a central unit connected to each electromechanical drive unit for each rotor blade via an suitable bidirectional interface, preferably a FS-bus or a FSOE interface, to send demanded rotation and/or position data for the rotor blades to the safety modules of each electromechanical drive unit for generating rotation signals and also sending a feathering signal to the safety modules in case of an emergency situation, where the safety modules are adapted to execute the safe feathering run for each rotor blade in response to the feathering signal. In a preferred embodiment the central unit is adapted to execute the safe feathering run for at least two out of three rotor blades in case of a wind turbine comprising three rotor blades or for at least one out of two rotor blades in case of a wind turbine comprising two rotor blades in order to transfer the loaded rotor into the feathering position (or state). This means, that a failure of one electromechanical drive unit being not able to execute the safe feathering run for its particular rotor blade can be safely managed via the central unit and the other rotor blades executing a safe feathering run being adapted for the participating rotor blades compensating the effect of the one rotor blade unable to execute its safe feathering run resulting in safe stopping the rotor. In an embodiment in case of an execution of a fault reaction by an electromechanical drive unit the fault is reported to the central unit by the corresponding safety module of the electromechanical drive unit. The faults reported may comprise the fault of not being able to execute a safe feathering run.

The invention further relates to a wind turbine comprising two or more rotor blades, where each rotor blade is rotated by a separate electromechanical motor of the pitch system according to the present invention.

In an embodiment the wind turbine further comprises a turbine control unit arranged in a nacelle of the wind turbine adapted to transmit position and/or speed commands for rotating each rotor blades to the central unit, where the central unit safety card is adapted to compare the transmitted position and/or speed commands as demanded position of each rotor blade to safe position and/or speed data reported to the central unit by each safety module and in case of a mismatch to send the feathering run signal to each safety module in order to execute the safe feathering run. A wind turbine comprises a tower comprising a nacelle on top of the tower being able to rotate about the vertical axis of the tower. The nacelle further comprises a horizontal rotation axis, where the rotor comprises a hub, which rotates about the horizontal rotation axis and being accelerated or decelerated by rotor blades mounted to the hub essentially vertical to the horizontal rotor axis. The turbine control unit provides overall control of the turbine and being connected to the grid. The connection to the central unit might be established via a FS bus or a FLD bus, where the FLD bus denotes any real-time industrial Ethernet or industrial fieldbus based data communication protocol such as ProfiBus or CAN, via a slip ring connection to the pitch system arranged in the rotor as the rotating part of the wind turbine. When used with an FS-bus, the FLD-bus is capable of supporting that FS-bus, e.g. EtherCat with FSOE or ProfiNet (ProfiBus) with ProfiSafe. In an embodiment, the communication between turbine central unit and the central unit of the pitch system may be established via an FLD-bus with FS-bus for safe communication of position and/or speed commands as well as demanded execution of the first safety function to the central unit. In another embodiment, the communication between turbine central unit and the central unit of the pitch system may be established via a non-safe FLD-bus for communication of position and/or speed commands and via a safety chain input connection established as a means for demanding execution of the first safety function to the central unit. The safety chain input to demand the first safety run might be a value set to 0V.

In another embodiment the central unit is adapted to compare the differences between the current angle/position of the rotor blades and in case of detecting a deviation between the present angle position of two or more rotor blades (relative to the wind), the central unit issues the feathering signal as the first safety signal to signal (command) execution of a safe feathering run in case of the differences exceeding a certain predetermined limit.

The invention further relates to a method to operate an electromechanical drive system according to the present invention with least one electromechanical drive unit comprising an electromechanical motor to actuate a movable component, where reliability, integrity and diagnostics of the actuation of the component is safety-relevant for operating the component, a conventional power unit to power the electromechanical motor, a conventional motor control unit connected to the conventional power unit in order to control the conventional power unit via motor control signals, a conventional measuring unit connected to the conventional motor control unit to determine motor position and/or motor speed data and to send these data as motor signals (MS) to the conventional motor control unit, a safety module connected to conventional motor control unit and conventional power unit, and an advanced position sensor connected to the safety module, comprising the steps of
- monitoring component position and/or speed of the actuated component with a sufficient degree of reliability and integrity to fulfill safety requirements for the safety-relevant actuations by the advanced position sensor, preferably a position encoder;
- sending corresponding sensor signals comprising position and/or speed data to the safety module via a first data connection by the advanced position sensor;
- transmitting actuation signals like actuation speed and desired component position from the safety module to the conventional motor control unit via a second data connection;
- transmitting the motor control signals via the safety module to the conventional power unit in order to enable execution of safety functions by the safety module;
- actuating the component by the electromechanical motor based on the motor control signals resulting from the actuation signals in accordance to one or more safety functions at least implemented on the safety module to ensure safe actuation of the component;
- comparing the monitored position and speed of the component with an expected behavior from the actuation signals by the safety module;
- actuating of the component in a resting or neutral position as a first safety function executed by safety module at least in an emergency situation.

### Brief description of the drawings

The aforementioned and other aspects of the invention will also be apparent from and elucidated with reference to the embodiments of the invention described herein after making reference to the drawings.
- Figure 1:: shows an embodiment of the electromechanical drive system according to the present invention;
- Figure 2:: shows another embodiment of the electromechanical drive system (or pitch system) according to the present invention comprising a central unit;
- Figure 3:: shows another embodiment of the electromechanical drive system related to fault reaction;
- Figure 4:: shows an embodiment of the wind turbine according to the present invention;
- Figure 5:: shows a method to operate the electromechanical drive system according to the present invention.

### Detailed description of embodiments

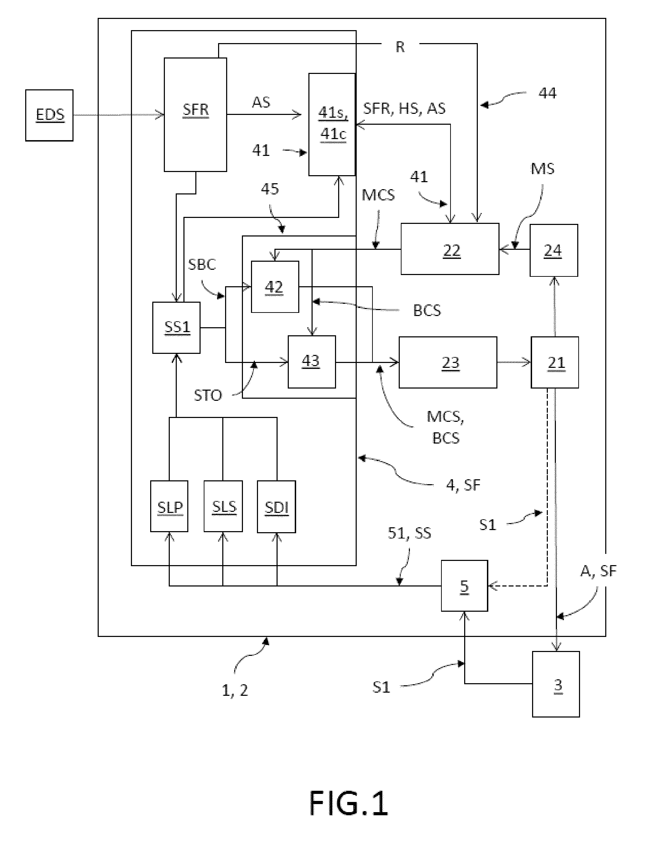

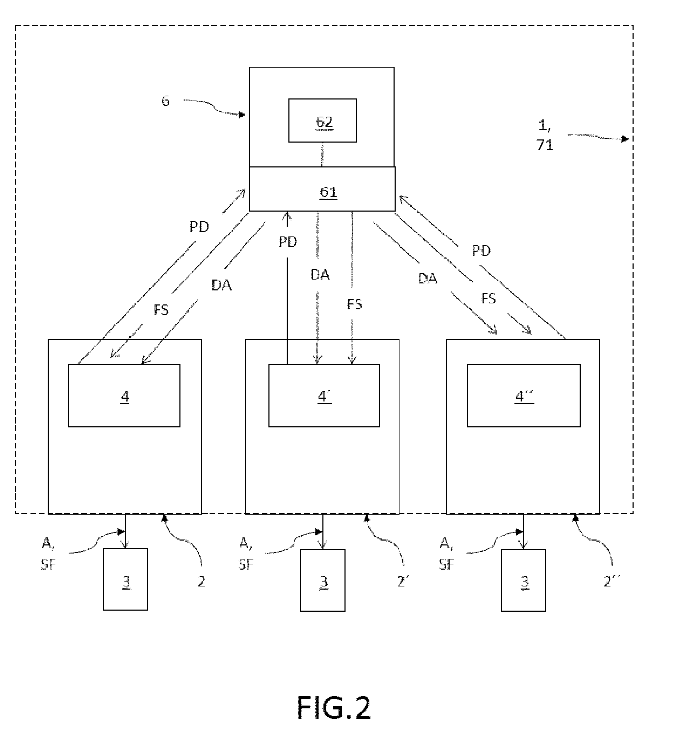

Figure 1 shows an embodiment of the electromechanical drive system 1 according to the present invention established by one electromechanical drive unit 2 actuating the movable safety-relevant component 3 comprising an electromechanical motor 21, where a conventional power unit 23 powers the electromechanical motor 21, a conventional motor control unit 22 is connected to the conventional power unit 23 and controls the conventional power unit 23 via motor control signals MCS and a conventional measuring unit 24, which is connected to the conventional motor control unit 22 to determine motor position and/or motor speed data and to send these data as motor signals MS to the conventional motor control unit 22. The reliability, integrity and diagnostics to provide safe actuation A of the component 3 is achieved by a safety module 4, arranged as a plug-in safety card in this embodiment, and an advanced position sensor 5, where the advanced position sensor 5 monitors S1 component position and/or speed of the actuated component 3 with a sufficient degree of reliability, integrity and diagnostics to fulfill safety requirements for the safety-relevant actuations and is connected to the safety module 4 via a first data connection 51 sending corresponding sensor signals SS comprising position and/or speed data to the safety module 4. The advanced position sensor 5 might be a safe linear or rotary encoder providing safe absolute position, speed and fault status data via a FS-bus interface 51 developed according to the IEC 61508 Standard as the first data connection 51 to the safety module 4. In case of a rotary encoder for rotations as the actuations the advanced position sensor 5 might be a SIL rated multi-turn encoder. In an alternative embodiment the sensor signals SS transmitted from the advanced position sensor 5 may be based on measured motor position and/or speed of the motor 21 as long as the data measured from the motor 21 provide a sufficient degree of reliability and integrity to fulfill safety requirements. The measurement of the motor position and/or speed data is indicated by the dashed arrow S1 directing from the motor 21 to the advanced position sensor 5. The advanced position sensor 5 might be attached to a motor shaft (not shown in details here), where a direct correlation between shaft position and speed and component position and speed exists. The sensor signals SS are further processed by the safety module 4 in order to calculate component position and/or speed from the motor position and/or speed. The safety module 4 is further connected to the conventional motor control unit 22 via a second data connection 41 to transmit actuation signals AS like actuation speed and desired component position to the conventional motor control unit 22 for actuating A the component 3 in accordance to one or more safety functions SF at least implemented on the safety module 4 to ensure safe actuation of the component 3, where the second data connection 41 comprises a first interface 41, preferably comprising a FS-bus as safety interface 41 s and/or an SSI interface as a conventional data interface 41 c. In order to ensure that the conventional motor control unit 22 indeed receives the actuation signals AS, the safety module 4 is adapted to prove an error-free communication and operation of the conventional motor control unit 22 by a so-called heartbeat-signal HS, where the conventional motor control unit 22 answers the heartbeat signal HS in a predetermined manner in case of operating properly. In case of detected errors in communication to and/or operation of the conventional motor control unit 22, the safety module 4 resets R the conventional motor control unit 22 via a direct access 44 to a reset line of the conventional motor control unit 22. A performed reset R may cause execution of the first safety function SFR. The safety module 4 compares the monitored position and/or speed of the component 3 with an expected behavior from the actuation signals AS and controls the motor control signals MCS transmitted to the conventional power unit 23 via the safety module 4. Therefore the safety module 4 comprises a PWM blocker module 42 receiving the motor control signals MCS from the conventional motor control unit 22, where execution of at least one of the safe-torque-off-control function STO and/or safe-stop-control function SS1 results in blocking the motor control signal MCS from passing the PWM blocker module 42 towards the conventional power control unit 23, preferably the output of the PWM blocker module 42 is set to 0V. The safety module 4 further comprises a brake blocker module 43 receiving a brake control signal BCS as another type of the motor control signal MCS from the conventional motor control unit 22, where execution of at least one of the safe-brake-control function SBC and/or safe-stop-control function SS1 results in blocking the brake control signal BCS from passing the brake blocker module 43 towards the conventional power control unit 23, preferably the output of the brake blocker module 43 is set to 0V. The safety functions SF comprise the actuation A of the component 3 in a resting or neutral position FP as a first safety function SFR executed by safety module 4 at least in an emergency situation and a safe-limited-position-control function SLP to ensure the position of the component 3 being within a certain range of allowed positions, a safe-limited-speed-control function SLS to ensure the speed of the actuated component 3 not exceeding a maximum speed, a safe-direction-control SDI function to ensure the component 3 being actuated into the desired direction, a safe-torque-off-control STO function to ensure that the torque applied to the component 3 is zero, a safe-brake-control function SBC to ensure the brake is applied and a safe-stop-control function SS1 to ensure execution of a stopping procedure in accordance to other safety functions SF. Therefore in this embodiment the safe-stop-control function SS1 is also connected to the first interface 41 in order to advise the conventional motor control unit 22 via the first interface 41 to decelerate the motor 21, e.g. as a part of the first safety function SFR. In this embodiment the safety module 4 acts as a man-in-the-middle device between the conventional motor control unit 22 and an external data source EDS providing demanded input data to execute a component actuation to a certain position in a certain way in accordance to one or more safety functions SF, where in response actuation signals AS like actuation speed and desired component position are transmitted from the safety module 4 to the conventional motor control unit 22. As an example the data source might be a central unit 6 as shown in fig.2. The safety module 4 is adapted to execute these implemented safety functions FS, therefore comprising one or more processors or computer chips able to execute a programmed procedure and/or to control semiconductor components installed on the safety module 4 in order to execute the programmed procedures. The required components of the safety module 4 are connected directly or indirectly via interfaces of the safety module 4 to the other components of the electromechanical drive unit 2 in order to execute the programmed procedures. These details are not shown explicitly in figure 1.

Figure 2 shows another embodiment of the electromechanical drive system 1 (or pitch system 71) according to the present invention comprising a central unit 6 comprising a central unit safety card 62, where one or more safety functions SF are implemented. The details of the electromechanical drive unit 2, 2' and 2" are shown in Figure 1. The electromechanical drive system 1 (or pitch system 71) of figure 2 comprises three electromechanical drive units 2, 2', 2", where the safety modules 4, 4', 4" of the electromechanical drive units 2, 2', 2" are connected to the central unit safety card 62 of the central unit 6 via a suitable bidirectional interface 61, preferably a FSOE interface, to send demanded actuation and/or position data DA for the components to the safety modules 4, 4', 4" of each electromechanical drive unit 2, 2', 2" for generating corresponding actuation signals AS. Also a first safety signal FS might be sent to the safety modules 4, 4', 4" in an emergency situation. The safety modules 4, 4', 4" will execute the first safety function SFR in response to the received first safety signal FS. The central unit 6 enables the execution of safety functions SF for all electromechanical drive units 2, 2', 2" in an aligned way.

Furthermore each safety module 4, 4', 4" reports at least the safe position and/or speed data PD of the component 3 to the central unit safety card 62, which compares the reported position and/or speed data PD to a demanded position and/or speed of each actuator A and in case of a mismatch will send the first safety signal FS to each safety module 4, 4', 4".

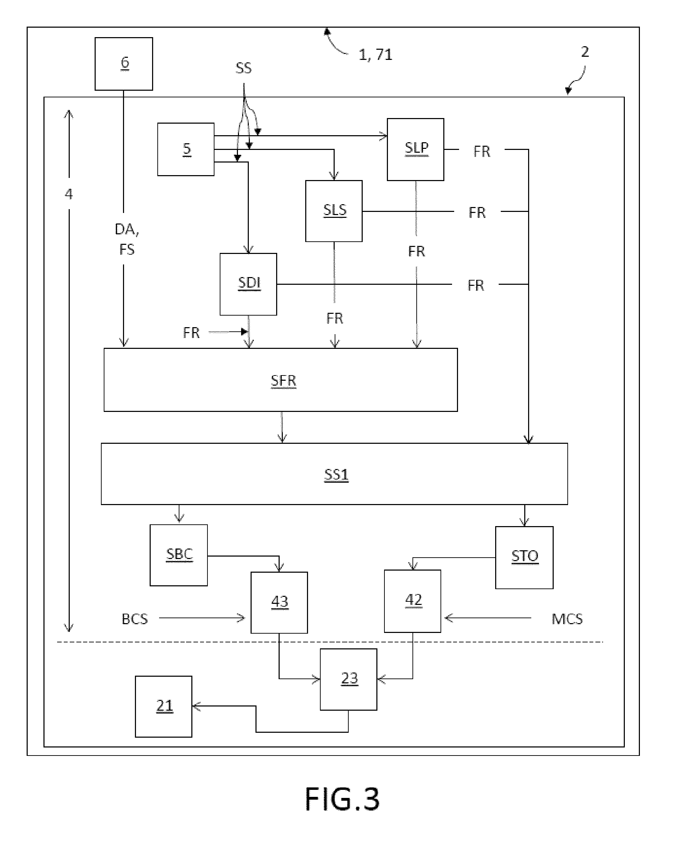

Figure 3 shows another embodiment of the electromechanical drive system related to fault reaction for an electromechanical drive system as shown in figure 1 and 2. The safety functions safe-limited-position-control function SLP, safe-limited-speed-control function SLS and safe-direction-control function SDI comprise defined fault reactions FR in order to guarantee reliability, integrity and diagnostics of the actuation A of the component 3 depending on the operation mode of the electromechanical drive system. The fault reaction FR of the safe-limited-position-control function SLP, safe-limited-speed-control function SLS and/or the safe-direction-control function SDI may demand execution of the first safety function SFR during normal operation of the electromechanical drive system or may demand the safe-stop-control function SS1 e.g. in case of manual operation of the electromechanical drive system, indicated by arrows indicated by "FR" directing either to SFR or SS1. The safety module 4 is further adapted to prove an error-free communication and operation of the conventional motor control unit 22 by a so-called heartbeat-signal HS, where a fault reaction FR scheme is initiated in response of a failed prove of a proper connection. The fault reaction FR might be the execution of the first safety function SFR. The correctly working communication between safety module 4 and the conventional motor control unit 22 ensures control commands transmitted from the safety module 4 can be executed by the conventional motor control unit 22, which as a diagnostic procedure increases the degree of reliability and integrity of the electromechanical drive system 1. In case of detected errors in communication and/or operation of the conventional motor control unit 22, the safety module 4 may reset the conventional motor control unit 22 via a direct access to a reset line of the conventional motor control unit 22. In case of an execution of a fault reaction FR by an electromechanical drive unit 2 the fault is reported to the central unit 6 by the corresponding safety module 4 of the electromechanical drive unit 2 (not shown here in details). The safe-limited-position-control function SLP monitors the component position such that the components 3 stay within a defined position range. The safe-limited-speed-control function SLS continuously monitors the speed of the actuation of the component during all modes actuating the component such that the speed stays below a maximum value. The safe-direction-control function SDI monitors the moving direction of the component, e.g. direction forth or back in case of linear movements or right of left in case of rotations. The safe-stop-control function SS1 initiates in response a deceleration of the electromechanical motor 21 and subsequently, after a specific time delay, commanding application of the safe-torque-off-control function STO and the safe-brake-control function SBC to achieve a safe state of the component. SS1, SBC and STO are also part of the first safety function SFR.

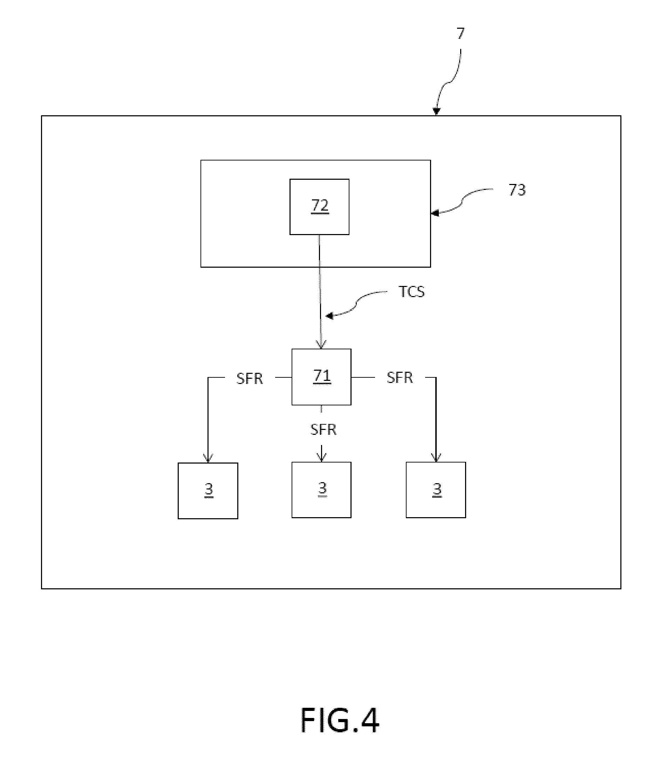

Figure 4 shows an embodiment of a wind turbine 7 according to the present invention in a schematic view. In this embodiment the wind turbine 7 comprises three rotor blades 3 as the actuated components 3. The pitch system suitable 71 comprising the electromechanical drive system with one electromechanical drive unit 2, 2', 2" provided for each rotor blade 3, where the electromechanical motor 21 of each electromechanical drive unit 2 is adapted to rotate the rotor blade 3 about its longitudinal axis as the actuation A. In case of an emergency situation or as a fault reaction, a safe feathering run SFR as the first safety function rotates the rotor blade 3 in a feathering position FP. The pitch system 71 further comprises central unit 6 connected to each electromechanical drive unit 2, 2', 2" for each rotor blade 3 via an suitable bidirectional interface 61 to send demanded rotation and/or position data for the rotor blades 3 to the safety modules 4, 4', 4" of each electromechanical drive unit 2, 2', 2" (not shown here in details) for generating rotation signals AS and also sending a feathering signal FS to the safety modules 4, 4', 4" in case of an emergency situation, where the safety modules 4, 4', 4" are adapted to execute the safe feathering run SFR for each rotor blade 3 in response to the feathering signal FS. The wind turbine further comprising a turbine control unit 72 arranged in a nacelle 73 of the wind turbine 7 adapted to transmit position and/or speed commands TCS for rotating each rotor blades 3 to the central unit 6 (here only the pitch system 71 is shown for ease of understanding), where the central unit safety card 62 in the central unit 6 is adapted to compare the transmitted position and/or speed commands TCS as demanded position of each rotor blade 3 to position data PD reported to the central unit 6 by each safety module 4, 4', 4" and in case of a mismatch to send the feathering signal FS to each safety module 4, 4', 4" in order to execute the safe feathering run SFR. In an embodiment, the safe feathering run SFR is divided in two different parts dependent on the current position of the rotor blades 3. The first part denotes the angle region of the rotor blade 3, where positive torque is applied to the rotor blade (accelerating wind load to rotor blade). The second part denotes the angle region of the rotor blade 3, where negative torque is applied to the rotor blade (decelerating wind load to the rotor blade 3). The angle, where a transition between first and second part occurs depends on the configuration of rotor blade 3 and wind turbine 7 setup. Typically this transition angle is in the range of 30°. Since wind force induced on the wind turbine 7 is at highest in the first part it is beneficial to get the rotor blades 3 out of this blade angle region as fast as possible. For this reason, SLS might be muted during SFR until the rotor blades 3 passing the transition angle. After having passed the transition angle, the speed of the rotation A of rotor blades 3 around its longitudinal axis is decelerated. The rotation speed further decreases when the rotor blade 3 approaches the feathering position FP. The speed might be decreased stepwise. When the rotor blades 3 have reached the feathering position FP, the safe-stop-control function is executed to finish the safe feathering run SFR. In another embodiment the central unit 6 is adapted to compare the differences between the current axis of the rotor blades 3 and in case of detecting a deviation between the present axis of two or more rotor blades 3 (relative to the wind), the central unit 6 issues the feathering signal FS to execute a safe feathering run SFR in case of the differences exceeding a certain predetermined limit.

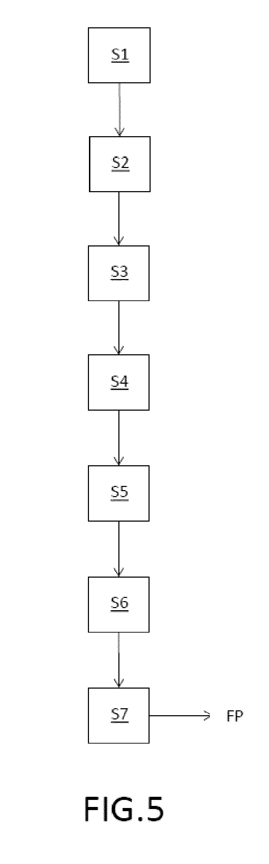

Figure 5 shows a method to operate the electromechanical drive system according to the present invention. The method comprises the steps of monitoring S1 component position and/or speed of the actuated component 3 with a sufficient degree of reliability, integrity and diagnostics to fulfill safety requirements for the safety-relevant actuations A by the advanced position sensor 5, sending S2 corresponding sensor signals SS comprising position and/or speed data to the safety module 4 via a first data connection 51 by the advanced position sensor 5, transmitting S3 actuation signals AS like actuation speed and desired component position from the safety module 4 to the conventional motor control unit 22 via a second data connection 41, transmitting S4 the motor control signals MCS via the safety module 4 to the conventional power unit 23 in order to enable execution of safety functions by the safety module, actuating S5 the component 3 by the electromechanical motor 21 based on the motor control signals MCS resulting from the actuation signals AS in accordance to one or more safety functions SF at least implemented on the safety module 4 to ensure safe actuation A of the component 3, comparing S6 the monitored S1 position and speed of the component with an expected behavior from the actuation signals AS by the safety module 4, and actuating S7 of the component 3 in a resting or neutral position FP as a first safety function SFR executed by safety module 4 at least in an emergency situation.

In another embodiment, the actuated component may comprise two or more subcomponents to be actuated together or separate from each other. As an example the actuated component might by a rotor and the subcomponents might be the rotor blades. In this case the safety module relates to an electromechanical drive unit driving all subcomponents e.g. with a conventional motor control unit sending motor control signals to a motor denoting here a motor system comprising two or more sub-motors each actuating one of the subcomponents. Accordingly the advanced position sensor denotes an advanced position sensor system with sub-sensors measuring safe position and/or speed data related to each subcomponent.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### List of reference numerals:

- 1: electromechanical drive system
- 2, 2', 2": electromechanical drive unit
- 21: electromechanical motor
- 22: conventional motor control unit
- 23: conventional power unit
- 24: conventional measuring unit
- 3: actuated component
- 4, 4', 4": safety module
- 41: second data connection to conventional motor control unit / first interface
- 41s: safety interface as part of the first interface
- 41c: conventional data interface as part of the first interface
- 42: PWM blocker module
- 43: brake blocker module
- 44: direct access of safety module to reset line of motor control unit 22
- 45: second interface
- 5: advanced position sensor, encoder
- 51: first data connection
- 6: central unit
- 61: bidirectional interface between central unit and electromechanical drive unit(s)
- 62: central unit safety card
- 7: wind turbine
- 71: pitch system
- 72: turbine control unit
- 73: nacelle
- A: actuation / actuating of the component
- AS: actuation signal
- BCS: brake control signal as one of the motor control signals
- DA: demanded actuation and/or position data send to safety module 4
- EDS: external data source (e.g. the central unit 6)
- FP: neutral or resting (feathering) position
- FR: fault reaction of a safety function
- FS: first safety signal, feathering signal
- HS: heartbeat signal
- MCS: motor control signal
- MS: motor signals
- PD: position data
- R: reset (command)
- S1: monitoring actuation and position of the component and/or the motor
- S2: sending sensor signals to the safety module
- S3: transmitting actuation signals from the safety module to the conventional motor control unit
- S4: transmitting the motor control signals by the safety module
- S5: actuating the component in accordance to one or more safety functions
- S6: comparing monitored position/speed of the component with an expected behavior
- S7: actuating the component in a resting or neutral position in an emergency situation
- SF: safety function
- SBC: safe-brake-control function
- SDI: safe-direction-control function
- SFR: first safety function / safety feathering run
- SLP: safe-limited-position-control function
- SLS: safe-limited-speed-control function
- SS1: safe-stop-control function
- STO: safe-torque-off-control function
- SS: sensor signals
- TCS: turbine control signal

## Claims

1. An electromechanical drive system (1) with at least one electromechanical drive unit (2) to actuate a movable component (3), where reliability, integrity and diagnostics of the actuation (A) of the component (3) is safety-relevant for operating the component (3), comprising a safety module (4), an advanced position sensor (5), an electromechanical motor (21) to actuate the component (3), a conventional power unit (23) to power the electromechanical motor (21), a conventional motor control unit (22) connected through the safety module to the conventional power unit (23) in order to control the conventional power unit (23) via motor control signals (MCS) and to enable execution of safety functions by the safety module, a conventional measuring unit (24) connected to the conventional motor control unit (22) to determine motor position and/or motor speed data and to send these data as motor signals (MS) to the conventional motor control unit (22),
where the advanced position sensor (5) is adapted to monitor (S1) component (3) and/or motor (21) position and/or speed of the actuated component (3) and/or motor (21) with a sufficient degree of reliability and integrity to fulfill safety requirements for the safety-relevant actuations and being connected to the safety module (4) via a first data connection (51) to send corresponding sensor signals (SS) comprising position and/or speed data to the safety module (4), where the safety module (4) is connected to the conventional motor control unit (22) via a second data connection (41) to transmit actuation signals (AS) like actuation speed and desired component position to the conventional motor control unit (22) for actuating (A) the component (3) in accordance to one or more safety functions (SF) at least implemented on the safety module (4) to ensure safe actuation of the component (3), and is adapted to compare the monitored (S1) position and/or speed of the component (3) with an expected behavior from the actuation signals (AS), where the safety functions (SF) at least comprise the actuation (A) of the component (3) in a resting or neutral position (FP) as a first safety function (SFR) executed by safety module (4) at least in an emergency situation.

2. The electromechanical drive system (1) according to claim 1, wherein the safety functions (SF) implemented on the safety module (4) further comprise one or more safety functions (SF) of the following functions safe-limited-position-control function (SLP) to ensure the position of the component (3) being within an allowed position range, safe-limited-speed-control function (SLS) to ensure the speed of the actuated component (3) not exceeding a maximum speed, safe-direction-control (SDI) function to ensure the component (3) being actuated into the desired direction, safe-torque-off-control (STO) function to ensure that the torque applied to the component (3) is zero, safe-brake-control function (SBC) to ensure a brake of the motor (21) is applied and/or safe-stop-control function (SS1) to ensure execution of a stopping procedure in accordance to other safety functions (SF) and where the safety module (4) is suitably adapted to execute the implemented safety functions (FS).

3. The electromechanical drive system (1) according to claim 2, wherein the safety module (4) comprises a PWM blocker module (42) receiving the motor control signals (MCS) from the conventional motor control unit (22), where execution of at least one of the safe-torque-off-control function (STO) and/or safe-stop-control function (SS1) results in blocking the motor control signal (MCS) from passing the PWM blocker module (42) towards the conventional power control unit (23), preferably the output of the PWM blocker module (42) is set to 0V.

4. The electromechanical drive system (1) according to claim 3, wherein the safety module (4) further comprises a brake blocker module (43) receiving a brake control signal (BCS) as another type of motor control signal (MCS) from the conventional motor control unit (22), where execution of at least one of the safe-brake-control function (SBC) and/or safe-stop-control function (SS1) results in blocking the brake control signal (BCS) from passing the brake blocker module (43) towards the conventional power control unit (23), preferably the output of the brake blocker module (43) is set to 0V.

5. The electromechanical drive system (1) according to any of the preceding claims, wherein the safety module (4) is adapted to prove an error-free communication and operation of the conventional motor control unit (22) by a so-called heartbeat-signal (HS), where the conventional motor control unit (22) answers the heartbeat signal (HS) in a predetermined manner in case of operating properly.

6. The electromechanical drive system (1) according to claim 5, wherein in case of detected errors in communication and/or operation of the conventional motor control unit (22), the safety module (4) is adapted to reset (R) the conventional motor control unit (22) via a direct access (44) to a reset line of the conventional motor control unit (22).

7. The electromechanical drive system (1) according to any of the preceding claims, wherein the safety module (4) is arranged as a plug-in safety card comprising a first interface (41) as the second data connection (41) to connect the safety card (4) to the conventional motor control unit (22), preferably comprising a FS-bus as safety interface (41 s) and/or an SSI interface as a conventional data interface (41 c), in order to at least transmit the actuation signals (AS) to the conventional motor control unit (22) and second interfaces (45) to transmit the motor control signal (MCS) and/or the brake control signal (BCS) to the conventional power unit (23) via the safety card (4).

8. The electromechanical drive system (1) according to any of the preceding claims, wherein the advanced position sensor (5) is a safe linear or rotary encoder providing safe absolute position and/or speed and fault status data via a FS-bus interface (51) developed according to the IEC 61508 Standard as the first data connection (51) to the safety module (4), preferably in case of a rotary encoder for rotations as actuations the advanced position sensor (5) is a SIL rated multi-turn encoder.

9. The electromechanical drive system (1) according to any of the preceding claims, wherein the electromechanical drive system (1) comprises at least two electromechanical drive units (2, 2', 2"), where the safety modules (4, 4', 4") of the electromechanical drive units (2, 2', 2") are connected to each other in order to at least exchange information comprising information about any applied safety function (SF) in order to trigger the other safety modules (4, 4', 4") to execute corresponding safety functions (SF) in an aligned way.

10. The electromechanical drive system (1) according to claim 9, where the connection is established via a central unit (6) comprising a central unit safety card (62) connected to each electromechanical drive unit (2, 2', 2") via a suitable bidirectional interface (61), preferably a FSOE interface, to send demanded actuation and/or position data (DA) for the components to the safety modules (4, 4', 4") of each electromechanical drive unit (2, 2', 2") for generating corresponding actuation signals (AS) and also sending a first safety signal (FS) to the safety modules (4, 4', 4") in an emergency situation, where the safety modules (4, 4', 4") are adapted to execute the first safety function (SFR) in response to the first safety signal (FS).

11. The electromechanical drive system (1) according to claim 10, wherein each safety module (4, 4', 4") is adapted to report at least safe position and /or speed data (PD) of the component (3) from the corresponding safety module (4, 4', 4") to the central unit (6), where the central unit safety card (62) is adapted to compare the reported safe position and/or speed data (PD) to a demanded position and/or speed of each actuator (A) and in case of a mismatch is adapted to send the first safety signal (FS) to each safety module (4, 4', 4").

12. A pitch system suitable (71) to rotate at least one rotor blade (3), preferably all rotor blades (3), of a wind turbine (7) comprising an electromechanical drive system (1) according to claim 1 for rotating the rotor blades (3), where the rotor blade (3) is the component (3) to be actuated (A), where the electromechanical motor (21) is adapted to rotate the rotor blade (3) about its longitudinal axis as the actuation (A) and where a safe feathering run (SFR) to rotate the rotor blade (3) in a feathering position (FP) is the first safety function (SFR).

13. The pitch system (71) according to claim 12, where the electromechanical drive system (1) comprises two or more electromechanical drive units (2, 2', 2"), further comprising a central unit (6) comprising a central unit safety card connected to each electromechanical drive unit (2, 2', 2") for each rotor blade (3) via an suitable bidirectional interface (61), preferably a FS-bus or a FSOE interface, to send demanded rotation and/or position data for the rotor blades (3) to the safety modules (4, 4', 4") of each electromechanical drive unit (2, 2', 2") for generating rotation signals and also sending a feathering signal (FS) to the safety modules (4, 4', 4") in case of an emergency situation, where the safety modules (4, 4', 4") are adapted to execute the safe feathering run (SFR) for each rotor blade (3) in response to the feathering signal (FS).

14. A wind turbine (7) comprising two or more rotor blades (3), where each rotor blade (3) is rotated by a separate electromechanical motor (21) of the pitch system (71) according to claim 12.

15. The wind turbine (7) according to claim 14, further comprising a turbine control unit (72) arranged in a nacelle (73) of the wind turbine (7) adapted to transmit position and/or speed commands (TCS) for rotating each rotor blades (3) to the central unit (6), where the central unit safety card (62) is adapted to compare the transmitted position and/or speed commands (TCS) as demanded position of each rotor blade (3) to safe position and/or speed data (PD) reported to the central unit (6) by each safety module (4, 4', 4") and in case of a mismatch to send the feathering signal (FS) to each safety module (4, 4', 4") in order to execute the safe feathering run (SFR).

16. A method to operate an electromechanical drive system (1) according to claim 1 with least one electromechanical drive unit (2) comprising an electromechanical motor (21) to actuate (A) a movable component (3), where reliability, integrity and diagnostics of the actuation (A) of the component (3) is safety-relevant for operating the component (3), a conventional power unit (23) to power the electromechanical motor (21), a conventional motor control unit (22) connected to the conventional power unit (23) in order to control the conventional power unit (23) via motor control signals (MCS), a conventional measuring unit (24) connected to the conventional motor control unit (22) to determine motor position and/or motor speed data and to send these data as motor signals (MS) to the conventional motor control unit (22), a safety module (4) connected to conventional motor control unit (22) and conventional power unit (23), and an advanced position sensor (5) connected to the safety module (4), comprising the steps of
- monitoring (S1) component and/or motor position and/or speed of the actuated component (3) and/or the motor (21) with a sufficient degree of reliability and integrity to fulfill safety requirements for the safety-relevant actuations (A) by the advanced position sensor (5), preferably a position encoder (5);
- sending (S2) corresponding sensor signals (SS) comprising position and/or speed data to the safety module (4) via a first data connection (51) by the advanced position sensor (5);
- transmitting (S3) actuation signals (AS) like actuation speed and desired component position from the safety module (4) to the conventional motor control unit (22) via a second data connection (41);
- transmitting (S4) the motor control signals (MCS) via the safety module (4) to the conventional power unit (23) in order to enable execution of safety functions by the safety module;
- actuating (S5) the component by the electromechanical motor (21) based on the motor control signals (MCS) resulting from the actuation signals (AS) in accordance to one or more safety functions (SF) at least implemented on the safety module (4) to ensure safe actuation (A) of the component (3);
- comparing (S6) the monitored (S1) position and speed of the component with an expected behavior from the actuation signals (AS) by the safety module (4);
- actuating (S7) of the component (3) in a resting or neutral position (FP) as a first safety function (SFR) executed by safety module (4) at least in an emergency situation.
